(19) Europäisches Patentamt / European Patent Office / Office européen des brevets

(11) EP 4 779 577 A1

(12) **DEMANDE DE BREVET EUROPEEN**

(43) Date de publication:
**22.07.2026 Bulletin 2026/30**

(21) Numéro de dépôt: **26151270.1**

(22) Date de dépôt: **12.01.2026**

(51) Classification Internationale des Brevets (IPC):
*G06T 19/20* (2011.01)

(52) Classification Coopérative des Brevets (CPC):
**G06T 19/20;** G06T 2219/2021

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **20.01.2025 FR 2500560**

(71) Demandeurs:
- **Airbus SAS**
  **31700 Blagnac Cedex (FR)**
- **Airbus Operations SAS**
  **31060 Toulouse (FR)**
- **Airbus Operations GmbH**
  **21129 Hamburg (DE)**

(72) Inventeurs:
- **OTTO, Matthias**
  **21129 HAMBOURG (DE)**
- **MAHLER, Fabian**
  **21129 HAMBOURG (DE)**
- **MORINIERE, Boris**
  **17300 ROCHEFORT (FR)**
- **BÜRGY, Olivier**
  **31060 TOULOUSE (FR)**
- **LELEU, Samuel**
  **31060 TOULOUSE (FR)**

(74) Mandataire: **Gevers & Orès**
**Immeuble le Palatin 2**
**3 Cours du Triangle**
**CS 80165**
**92939 Paris La Défense Cedex (FR)**

(54) **PROCÉDÉ ET DISPOSITIF INFORMATIQUE POUR TRANSFORMER UN MAILLAGE TEXTURÉ D'UN OBJET CONÇU EN UN MAILLAGE TEXTURÉ D'UN OBJET FABRIQUÉ CORRESPONDANT AUDIT OBJET CONÇU**

(57) - Procédé et dispositif informatique pour transformer un maillage texturé d'un objet conçu en un maillage texturé d'un objet fabriqué correspondant audit objet conçu.
- Le procédé pour déterminer un maillage texturé transformé (M2) d'un objet fabriqué (O2) tridimensionnel à partir d'un maillage texturé initial (M1) d'un objet conçu (O1) tridimensionnel, le maillage texturé transformé (M2) étant destiné à être utilisé lors de l'impression d'une texture bidimensionnelle (T) correspondante sur l'objet fabriqué (O2), met en œuvre un traitement itératif pour déterminer un jeu de transformations affines à paramètres individualisés permettant de minimiser la valeur d'une fonction cible comprenant au moins un terme favorisant une propriété spécifique, le jeu de transformations affines ainsi déterminé étant appliqué aux sommets du maillage texturé initial (M1) de manière à obtenir le maillage texturé transformé (M2), ledit procédé étant relativement simple à mettre en œuvre et particulièrement avantageux.

Fig. 3

EP 4 779 577 A1

## Description

### Domaine technique

La présente invention concerne un procédé et un dispositif informatique pour transformer un maillage texturé d'un objet conçu en un maillage texturé d'un objet fabriqué correspondant audit objet conçu.

### Etat de la technique

L'invention concerne plus particulièrement le domaine du mappage de texture consistant à appliquer des données d'une texture bidimensionnelle à un objet tridimensionnel. Le mappage de texture peut être utilisé pour imprimer sur l'objet tridimensionnel des représentations de couleurs, de textes, de logos, d'images, de dessins artistiques, ... Cet objet tridimensionnel peut être de grande taille, tel qu'un avion par exemple, et présenter une ou des surfaces courbes. En vue de la fabrication d'un objet tridimensionnel, on conçoit généralement, préalablement, par conception assistée par ordinateur, un objet tridimensionnel auquel on associe une texture bidimensionnelle.

Or, en général, la géométrie de l'objet fabriqué ne correspond pas parfaitement à celle de l'objet conçu initialement, avec souvent des erreurs qui sont significativement plus grandes que la précision d'impression requise. Par exemple, dans le cadre d'une impression sur un avion, l'avion tel que fabriqué présente généralement une forme différente de celle de l'avion conçu, en raison de déformations dues notamment à une répartition différente des efforts entre un avion en vol et un avion au sol ainsi que par rapport aux tolérances de fabrication. Il est nécessaire de tenir compte de telles déformations dans le mappage de texture.

L'existence d'une méthode de mappage basée sur la mise en correspondance d'un maillage tessellé de l'objet fabriqué avec un maillage tessellé de l'objet conçu pour transférer les coordonnées de la texture de la livrée est connue de l'art antérieur. Le maillage tessellé de l'objet fabriqué est construit à partir d'un nuage de points (bruité) acquis par métrologie. Il en résulte une tessellation complexe et un maillage de grande taille contenant potentiellement plusieurs fois plus de sommets que le maillage de l'objet conçu, ce qui rend nécessaire (pour obtenir un maillage suffisamment petit pour être utilisé ultérieurement dans le calcul d'images matricielles) la mise en place d'un filtrage qui est à la fois complexe (calcul intensif, réglages difficiles à réaliser, compromis à trouver entre la fidélité à l'objet fabriqué et le nombre de sommets, ...) et difficile à mettre en œuvre.

De plus, la mise en œuvre d'une transformation rigide (c'est-à-dire une même transformation qui s'applique à tous les points transformés) pour l'alignement sur le nuage de points est connue de l'art, ce qui peut générer des problèmes de fidélité de la reproduction de la texture sur l'objet fabriqué par rapport à l'objet conçu, puisque lors de la fabrication tous les points ne subissent pas la même déformation entre l'objet conçu et l'objet fabriqué.

Il existe donc un besoin de trouver une solution permettant de déterminer, avec précision, à partir d'un maillage texturé de l'objet conçu à partir duquel est réalisée la fabrication d'un objet fabriqué, un maillage texturé de l'objet fabriqué, qui permet de réaliser une reproduction fidèle de la texture.

### Exposé de l'invention

La présente invention a pour objet de proposer une telle solution. Pour ce faire, elle concerne un procédé pour déterminer un maillage texturé dit transformé d'un objet fabriqué tridimensionnel à partir d'un maillage texturé dit initial d'un objet conçu tridimensionnel, l'objet fabriqué correspondant à l'objet conçu, ledit maillage texturé transformé étant destiné à être utilisé lors de l'impression d'une texture bidimensionnelle correspondante sur l'objet fabriqué, ledit procédé étant mis en œuvre par un dispositif informatique et comprenant au moins les étapes suivantes :

- une étape de réception pour recevoir un maillage représentant l'objet conçu tridimensionnel et une texture bidimensionnelle associée, qui forment ledit maillage texturé initial comprenant des sommets, ainsi que des points tridimensionnels d'un nuage de points acquis sur l'objet fabriqué ; et
- une étape de détermination pour déterminer le maillage texturé transformé, en prenant en compte au moins certains desdits sommets et au moins certains desdits points tridimensionnels.

Selon l'invention, l'étape de détermination met en œuvre un traitement (ou calcul) itératif pour déterminer un jeu de transformations affines à paramètres individualisés permettant de minimiser la valeur d'une fonction cible, en tenant compte dudit maillage texturé initial et desdits points tridimensionnels pris en compte du nuage de points, la fonction cible (précisée ci-dessous) comprenant au moins un terme favorisant une propriété spécifique concernant le jeu de transformations affines, le jeu de transformations affines ainsi déterminé étant appliqué aux sommets pris en compte du maillage texturé initial de manière à obtenir ledit maillage texturé transformé.

Dans le cadre de la présente invention, on entend par jeu de transformations affines à paramètres individualisés, le fait que les différents paramètres du jeu de transformations sont déterminés individuellement, et en particulier ne sont pas, par principe, tous égaux comme dans le cas d'une transformation rigide. Ce jeu de transformations affines à paramètres individualisés permet donc de mettre en œuvre une transformation non rigide.

Dans un mode de réalisation préféré, l'étape de détermination comporte au moins la suite de sous-étapes successives suivantes, ladite suite étant mise en œuvre de façon itérative :

- une première sous-étape pour appliquer un jeu de transformations affines aux sommets pris en compte du maillage texturé initial de manière à obtenir des sommets d'un maillage texturé dit calculé, ledit jeu de transformations affines correspondant lors de la première itération à un jeu de transformations affines prédéterminé et lors de chacune des itérations suivantes à un jeu de transformations affines déterminé à l'itération précédente ;
- une deuxième sous-étape pour calculer la valeur de la fonction cible à partir des sommets pris en compte du maillage texturé initial, des points tridimensionnels pris en compte du nuage de points et des sommets du maillage texturé calculé ;
- une troisième sous-étape pour comparer ladite valeur calculée de la fonction cible à une valeur seuil prédéterminée et pour :

  • si ladite valeur calculée est inférieure à la valeur seuil, arrêter l'étape de détermination et considérer que le maillage texturé transformé correspond au maillage texturé calculé à la première sous-étape de l'itération courante ; et
  • si ladite valeur calculée est supérieure ou égale à la valeur seuil, poursuivre l'étape de détermination en mettant en œuvre la quatrième sous-étape ; et

- la quatrième sous-étape pour déterminer un nouveau jeu de transformations affines en fonction de la fonction cible et du jeu de transformations affines, ce nouveau jeu de transformations affines étant utilisé à la première sous-étape de l'itération suivante.

Ainsi, grâce à l'invention, on prévoit deux maillages de type similaire (avec le même nombre de sommets), le premier maillage correspondant à la tessellation de l'objet tel que conçu et le second maillage étant créé comme une copie du premier maillage, copie qui est formée pour s'adapter à l'objet tel que fabriqué (défini par le nuage de points acquis) à l'aide d'une transformation non rigide, c'est-à-dire d'une transformation (affine) potentiellement différente pour chaque sommet du maillage.

Pour ce faire, le procédé utilise un modèle de déformation (à savoir ledit jeu de transformations affines) modélisant la déformation non rigide (due par exemple à la gravité et aux tolérances de fabrication dans le cas d'un avion) de l'objet fabriqué comparé à l'objet tel que dessiné (ou conçu) en CAO (conception assistée par ordinateur). Cela entraîne un léger déplacement des sommets du maillage créé sans changer la structure globale du maillage (même nombre de sommets et de polygones, régularité des polygones, ...). Le procédé permet ainsi de déterminer, de façon relativement simple (sans filtrage complexe) et précise, un maillage texturé d'un objet fabriqué qui permet de réaliser une reproduction prenant en compte des caractéristiques particulières du fuselage (hublots, encadrement de portes...).

De plus, le procédé réalise une transformation non rigide du second maillage pour ajuster le nuage de points de l'objet fabriqué à l'aide du jeu de transformations, qui peut être adapté pour assurer notamment, comme précisé ci-dessous, que certains sommets correspondent précisément à des positions souhaitées et que la proportion de certaines parties de la texture soit conservée.

Par conséquent, grâce à l'invention, il n'est pas nécessaire de procéder à une tessellation complexe à partir d'un nuage de points bruyants et à un filtrage complexe associé, comme dans l'exemple précité du document US 10 198 860 B1.

Avantageusement, ladite étape de détermination est arrêtée, le cas échéant, lorsqu'un nombre prédéterminé d'itérations est atteint, le maillage texturé transformé correspondant alors au dernier maillage texturé calculé.

Dans le cadre de la présente invention, la fonction cible comprend au moins un terme et de préférence une pluralité de termes, précisés ci-dessous, qui favorisent, à chaque fois, une propriété spécifique concernant le jeu de transformations.

Ainsi, de façon avantageuse, la fonction cible comprend au moins un terme amenant certains sommets du maillage texturé transformé à correspondre (précisément) à des points dit cible de l'objet fabriqué.

De plus, avantageusement, la fonction cible comprend au moins un terme amenant certains sommets du maillage texturé transformé à conserver une distance prédéterminée entre eux de manière à conserver les proportions de certaines parties de la livrée.

En outre, dans un mode de réalisation particulier, la fonction cible comprend au moins l'un des termes suivants :

- un terme amenant le maillage texturé transformé à s'adapter aux points tridimensionnels acquis sur l'objet fabriqué ;

- un terme amenant la transformation générée par le jeu de transformations affines à forcer une déformation lisse ;
- un terme amenant la transformation générée par le jeu de transformations affines à s'approcher d'une transformation rigide.

Dans un mode de réalisation préféré, la quatrième sous-étape comprend les opérations successives suivantes :

- calcul du gradient de la fonction cible par rapport au jeu de transformations affines ;
- détermination d'une direction d'ajustement sur la base de ce gradient ; et
- détermination d'un nouveau jeu de transformations affines le long de cette direction d'ajustement.

Avantageusement, la quatrième sous-étape utilise un solveur spécialisé de moindres carrés non linéaires.

Dans un mode de réalisation particulier, le procédé comporte :

- une étape de calcul pour déterminer le jeu de transformations affines initial ; et/ou
- une étape de calcul pour déterminer les points cible de l'objet fabriqué ; et/ou
- une étape de calcul pour déterminer au moins une zone de la texture bidimensionnelle dont les proportions doivent être préservées.

La présente invention concerne également un dispositif informatique pour déterminer un maillage texturé dit transformé d'un objet fabriqué tridimensionnel à partir d'un maillage texturé dit initial d'un objet conçu tridimensionnel, l'objet fabriqué correspondant à l'objet conçu, ledit maillage texturé transformé étant destiné à être utilisé lors de l'impression d'une texture bidimensionnelle correspondante sur l'objet fabriqué, ledit dispositif informatique comportant au moins :

- une unité de réception configurée pour recevoir un maillage représentant l'objet conçu tridimensionnel et la texture bidimensionnelle associée, qui forment ledit maillage texturé initial comprenant des sommets, ainsi que des points tridimensionnels d'un nuage de points acquis sur l'objet fabriqué ; et
- une unité de calcul configurée pour déterminer le maillage texturé transformé, en prenant en compte au moins certains desdits sommets et au moins certains desdits points tridimensionnels.

Selon l'invention, l'unité de calcul comporte des éléments de calcul configurés pour mettre en œuvre un traitement (ou calcul) itératif afin de déterminer un jeu de transformations affines à paramètres individualisés permettant de minimiser la valeur d'une fonction cible, en tenant compte dudit maillage texturé initial et desdits points tridimensionnels pris en compte du nuage de points, la fonction cible comprenant au moins un terme favorisant une propriété spécifique concernant le jeu de transformations affines, le jeu de transformations affines ainsi déterminé étant appliqué aux sommets pris en compte du maillage texturé initial de manière à obtenir ledit maillage texturé transformé.

**Brève description des figures**

Les figures annexées feront bien comprendre comment l'invention peut être réalisée. Sur ces figures, des références identiques désignent des éléments semblables.

La figure 1 est le schéma synoptique d'un procédé pour transformer un maillage texturé d'un objet conçu en un maillage texturé d'un objet fabriqué correspondant audit objet conçu.

La figure 2 montre schématiquement un dispositif configuré pour mettre en œuvre le procédé de la figure 1.

La figure 3 montre schématiquement une partie d'un objet conçu et la même partie d'un objet fabriqué permettant de bien mettre en évidence des caractéristiques du procédé de la figure 1.

**Description détaillée**

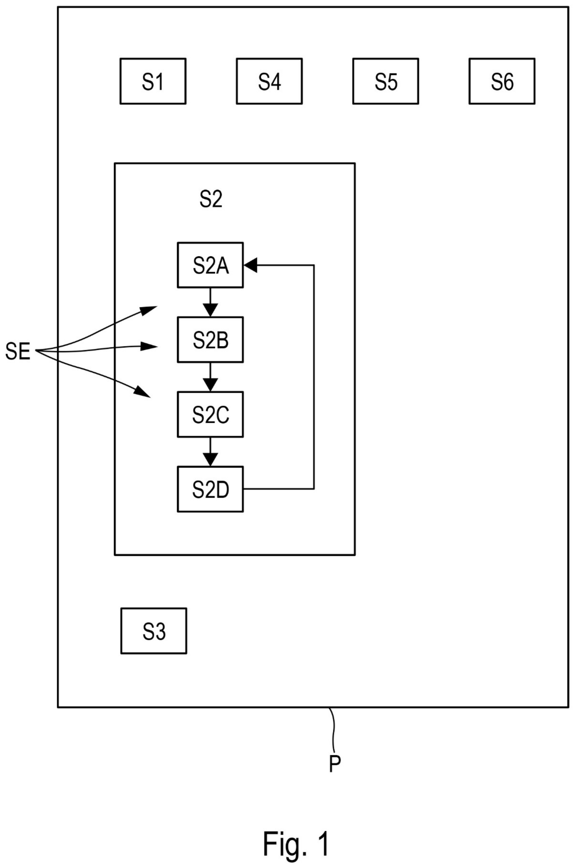

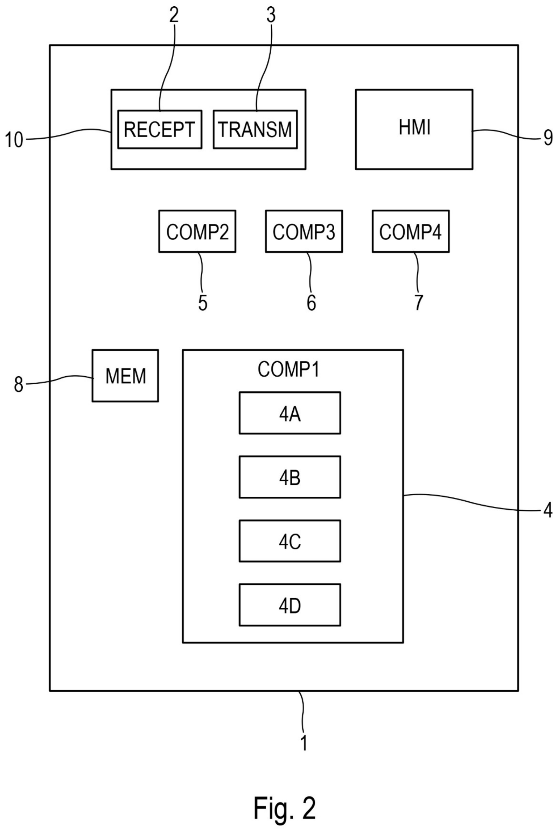

Dans le cadre de la présente invention, un procédé P (par exemple tel que celui représenté dans un mode de réalisation particulier sur la figure 1) qui est susceptible d'être mis en œuvre par un dispositif informatique 1 (par exemple tel que celui représenté dans un mode de réalisation particulier sur la figure 2), est destiné à former un maillage texturé précisé ci-dessous.

Ce maillage texturé est utilisé dans un mappage de texture qui consiste à appliquer des données d'une texture bidimensionnelle (ou 2D) à un objet tridimensionnel (ou 3D). Le mappage de texture peut être utilisé pour ajouter à l'objet tridimensionnel des représentations notamment de couleurs, de textes, de logos, d'images, de dessins artistiques, ...

Le maillage texturé obtenu est notamment utilisé par un système d'impression usuel (non représenté) pour une impression directe sur forme de type DTS (« Direct-to-Shape Printing » en anglais), qui est une technologie d'impression permettant d'imprimer directement sur la surface tridimensionnelle d'un objet, quelle que soit sa forme ou sa texture. Ce maillage texturé permet notamment de déterminer des images matricielles (« raster images » en anglais) susceptibles d'être utilisées par le système d'impression.

Dans le cadre de la présente invention, pour des raisons de simplification, on entend par « objet » tout engin, machine ou autre élément mécanique ou une partie d'un tel engin, machine ou autre élément mécanique dont une surface ou une partie de surface est susceptible de recevoir une telle impression. Il peut notamment s'agir d'une surface externe d'un avion sur lequel vont être imprimés des signes caractéristiques (logos, couleurs, ...) et des marquages techniques (identifiants des portes et panneaux, instructions pour le personnel au sol,...) de la compagnie aérienne qui va exploiter l'avion.

En vue de la fabrication d'un objet tridimensionnel, on conçoit généralement, préalablement, par conception assistée par ordinateur, un objet tridimensionnel auquel on associe une texture bidimensionnelle définissant la représentation à appliquer à l'objet conçu.

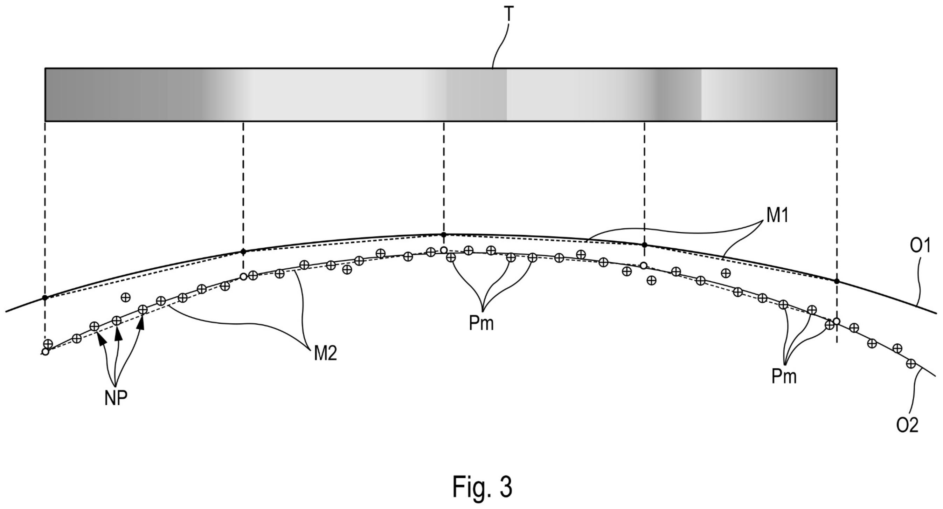

Sur la figure 3, on a représenté à titre d'illustration, une texture bidimensionnelle T qui est définie pour l'objet conçu O1 représenté (partiellement) en coupe et qui est destinée à être appliquée sur un objet fabriqué O2 également représenté (partiellement) en coupe.

L'objet fabriqué O2 correspond à l'objet conçu O1, c'est-à-dire qu'il est fabriqué sur la base de l'objet conçu O1. Or, généralement, la géométrie de l'objet fabriqué O2 ne correspond pas parfaitement à celle de l'objet conçu O1 initialement, comme représenté sur la figure 2, avec souvent des erreurs significativement plus grandes que la précision d'impression requise, qui peut être inférieure au millimètre voire descendre à quelques dizaines de microns. Par exemple, dans le cas d'un avion, l'avion fabriqué présente généralement une forme différente de celle de l'avion conçu, en raison de déformations dues notamment à la gravité (jusqu'à quelques centimètres) et aux tolérances de fabrication (jusqu'à quelques millimètres).

L'objet fabriqué O2 est défini par un nuage de points NP, comme représenté sur la figure 3. Les points tridimensionnels Pm de ce nuage de points NP sont déterminés (ou mesurées ou acquis), de façon usuelle, par un système de métrologie, par exemple par photogrammétrie (qui utilise des photographies), à l'aide d'un scanner laser ou par profilométrie (qui mesure la topographie de la surface). Dans le cas d'un objet tridimensionnel de grande taille, tel qu'une partie du fuselage d'un avion par exemple, le nombre de points tridimensionnels peut être très important, de l'ordre du million voire du milliard de points.

Le procédé P mis en œuvre par le dispositif informatique 1 a pour objet de déterminer un maillage texturé dit transformé M2 de l'objet fabriqué O2, à partir d'un maillage texturé dit initial M1 de l'objet conçu O1.

Le maillage texturé transformé M2 est destiné à l'impression de la texture bidimensionnelle T correspondante sur l'objet fabriqué O2, notamment en étant utilisé pour former des images matricielles (« raster images » en anglais).

Pour ce faire, ledit procédé P comprend, comme représenté sur la figure 1, notamment les étapes suivantes, mises en œuvre par le dispositif informatique 1 :

- une étape de réception S1 mise en œuvre par une unité de réception 2 (RECEPT pour « reception unit » en anglais) du dispositif informatique 1 (figure 2), pour recevoir au moins :

  • un maillage tesselé représentant l'objet conçu O1 tridimensionnel et une texture bidimensionnelle T associée, qui forment le maillage texturé initial M1 comprenant N sommets ; et
  • M points tridimensionnels Pm d'un nuage de points NP acquis sur l'objet fabriqué O2, M étant un entier différent de l'entier N et généralement supérieur à N ; et

- une étape de détermination S2 mise en œuvre par une unité de calcul 4 (COMP1 avec COMP pour « computing unit » en anglais) du dispositif informatique 1, pour déterminer le maillage texturé transformé M2 , au moins à partir des éléments suivants : au moins certains ou l'ensemble des N sommets et au moins certains ou l'ensemble des M points tridimensionnels; et
- une étape de transmission S3 mise en œuvre par une unité de transmission 3 (TRANSM pour « transmission unit » en anglais) du dispositif informatique 1, pour transmettre le maillage texturé transformé M2 à un dispositif utilisateur (non représenté), par exemple un calculateur, et notamment un calculateur pour déterminer des images matricielles susceptibles d'être utilisées par le système d'impression.

Dans la suite de la description, on prend en compte les paramètres suivants :

$X = \{x_0,...,x_{N-1}\}$ qui sont les N sommets du maillage texturé M1 de l'objet conçu O1 ;
$Y = \{y_0,...,y_{M-1}\}$ qui sont les M points tridimensionnels (référencés Pm sur la figure 3) du nuage de points NP, tels qu'acquis sur l'objet fabriqué O2 ; et

$\hat{X} = \{\hat{x}_0, \ldots, \hat{x}_{N-1}\}$ qui sont les positions respectives des N points du maillage texturé transformé M2, déterminé à l'étape de détermination S2 du procédé P.

A l'étape de détermination S2, il est possible d'utiliser tous les N sommets et tous les M points tridimensionnels mais il est également possible de sélectionner uniquement certains de ces N sommets et/ou certains de ces M points tridimensionnels selon la position souhaitée. La sélection est importante par rapport aux points, car il est souhaité d'éviter un décalage par rapport à la position théorique qui a été déterminée en CAO.

Dans la description suivante, on prend en compte et on utilise tous les N sommets et tous les M points tridimensionnels à l'étape de détermination.

Comme représenté sur la figure 1, l'étape de détermination S2 comporte une suite SE de sous-étapes successives S2A à S2D. Cette suite SE est mise en œuvre de façon itérative.

L'étape de détermination S2 comporte, tout d'abord, la sous-étape S2A mise en œuvre par un élément de calcul 4A de l'unité de calcul 4, pour appliquer un jeu de transformations affines $\Xi = ((A_0, t_0), \ldots, (A_{N-1}, t_{N-1}))$ aux N sommets du maillage texturé initial M1 de manière à obtenir N sommets d'un maillage texturé dit calculé M3. Le jeu de transformations affines correspond :

- lors de la première itération, à un jeu de transformations affines dit initial, ce jeu de transformations affines initial peut être, par exemple, aussi simple qu'un ensemble de transformations rigides où les transformations rigides sont toutes les mêmes et correspondent au meilleur ajustement des sommets sur les nuages de points ; et
- lors de chacune des itérations suivantes, au jeu de transformations affines déterminé à l'itération (directement) précédente.

Pour calculer une transformation non rigide, le procédé P utilise une transformation affine $(A_i, t_i)$ potentiellement différente sur chaque point $x_i$ du maillage texturé M1, qui s'écrit comme suit :
$\hat{x}_i = A_i x_i + t_i$ avec $A_i \in R^{3 \times 3}$ et $t_i \in R^3$, $(A_i, t_i)$ étant une transformation affine, les douze composantes de $A_i$ et $t_i$ n'ont pas de contraintes a priori (contrairement à une transformation rigide où $A_i$ serait une matrice de rotation).

Le jeu de transformations est ainsi dit « à paramètres individualisés ».

L'étape de détermination S2 comporte, ensuite, la sous-étape S2B mise en œuvre par un élément de calcul 4B de l'unité de calcul 4, pour calculer la valeur V1 d'une fonction cible E à partir des N sommets du maillage texturé initial M1, des M points tridimensionnels du nuage de points NP et des N sommets du maillage texturé calculé M3 (calculé à la sous-étape S2A). La fonction cible E comprend au moins un terme favorisant une propriété spécifique concernant le jeu de transformations affines, comme précisé ci-dessous.

L'étape de détermination S2 comporte ensuite la sous-étape S2C mise en œuvre par un élément de calcul 4C de l'unité de calcul 4, pour comparer la valeur V1 calculée (à la sous-étape S2B) de la fonction cible E à une valeur seuil V2 prédéterminée de cette fonction cible E et pour :

- si la valeur V1 calculée est inférieure à la valeur seuil V2, arrêter l'étape de détermination S2 et considérer que le maillage texturé transformé M2 correspond au maillage texturé M3 calculé à la sous-étape S2A de l'itération courante ; et
- si la valeur V1 calculée est supérieure ou égale à la valeur seuil V2, poursuivre l'étape de détermination S2 en mettant en œuvre la sous-étape S2D.

La sous-étape S2D est mise en œuvre par un élément de calcul 4D de l'unité de calcul 4, pour déterminer un nouveau jeu de transformations affines en fonction de la fonction cible E et du jeu de transformations affines courant, ce nouveau jeu de transformations affines étant utilisé à la sous-étape S2A de l'itération suivante.

L'étape de détermination S2 réalise donc une opération d'optimisation dont l'objectif est de trouver les paramètres (individualisés) du jeu de transformations affines qui minimisent la fonction cible E.

Par ailleurs, dans un mode de réalisation particulier, l'étape de détermination S2 est également arrêtée lorsqu'un nombre prédéterminé d'itérations est atteint, et ceci même si la valeur V1 calculée n'est pas (encore) inférieure à la valeur seuil V2.

Dans ce cas, le maillage texturé transformé M2 correspondant au dernier maillage texturé calculé M3 obtenu à la sous-étape S2A.

Dans ce mode de réalisation particulier, la suite SE de sous-étapes successives est donc mise en œuvre de façon itérative jusqu'à ce que l'une des conditions suivantes soit remplie : un nombre prédéterminé d'itérations est atteint, la valeur V1 calculée de la fonction cible E est inférieure à la valeur seuil V2.

Par ailleurs, dans un mode de réalisation particulier, le procédé P comporte également une étape de calcul S4 mise en œuvre par un élément de calcul 5 (COMP2) du dispositif informatique 1, pour déterminer la transformation affine initiale (utilisée lors de la première itération à la sous-étape S2A). Il ne s'agit pas d'une transformation affine unique, mais d'un ensemble de transformations affines, même si, typiquement, on choisira la même transformation pour tous les points, et cette transformation sera une transformation rigide qui s'ajustera au mieux aux N sommets sur les M points du nuage de points.

Dans une première mise en œuvre de ce mode de réalisation particulier, l'étape de calcul S4 détermine la transformation rigide à partir d'un algorithme ICP (pour « Iterative Closest Point » en anglais), et l'utilise comme transformation affine initiale pour chaque point $x_i$ du maillage texturé M1.

En outre, dans une seconde mise en œuvre de ce mode de réalisation particulier, l'étape de calcul S4 estime la transformation affine initiale à partir de données disponibles telles que, par exemple, une connaissance approximative du référentiel du maillage texturé de l'objet conçu O1 dans le référentiel du système de métrologie utilisé pour scanner l'objet fabriqué O2.

Comme indiqué ci-dessus, la fonction cible E utilisée à la sous-étape S2B comprend au moins un terme favorisant une propriété spécifique, concernant le jeu de transformations affines.

De préférence, la fonction cible E comporte une pluralité de tels termes, auxquels sont associés des coefficients de pondération, comme précisé ci-dessous, pour pondérer l'effet relatif que l'on cherche à donner aux différents termes.

La fonction cible E comprend au moins un terme de position $E_p$ amenant certains sommets du maillage texturé transformé M2 à s'approcher de points dit cible de l'objet fabriqué O2.

Le but de ce terme de position $E_p$ est donc de forcer certains points à être proches de certains points (ou positions) cible. Ceci est particulièrement adapté à la situation où certains éléments de la texture doivent être attachés à des points précis de l'objet fabriqué O2, par exemple sur le contour d'une fenêtre ou d'une porte dans le cas d'un avion, et qu'aucun déplacement de cette représentation n'est souhaité.

Dans ce cas, le procédé P comporte, de préférence, une étape de calcul S5, mise en œuvre par un élément de calcul 6 (COMP3) du dispositif informatique 1, pour déterminer ces points cible. Dans ce cadre, on désigne par C un ensemble de sommets $X = \{x_0, \ldots, x_{N-1}\}$ avec des contraintes de position et $m_i$ le point cible spécifique du nuage de points $Y = \{y_0, \ldots, y_{M-1}\}$ qui est déterminé pour correspondre à chaque point $x_i$ faisant partie de l'ensemble C.

Dans un mode de réalisation préféré, le terme de position $E_p$ vérifie l'expression suivante :

$$E_p = \sum_{x_i \in C} \|\hat{x}_i - m_i\|^2$$

dans laquelle :

- C est donc un ensemble de points de maillage avec des contraintes de position ; et
- $m_i$ est donc un point cible spécifique pour $x_i$. Typiquement, dans le cas d'un avion, il peut donc s'agir de points sur le contour des portes et de fenêtres, contour où l'on souhaite que des éléments particuliers de décoration soient correctement installés. Par exemple : lors d'un marquage de sécurité autour d'une trappe, le marquage doit absolument être centré par rapport à la trappe car il existe une contrainte de positionnement à respecter.

Par ailleurs, la fonction cible E comprend au moins un terme dit de préservation de forme $E_i$ qui amène certains sommets du maillage texturé transformé M2 à conserver une distance prédéterminée entre eux.

Ceci est particulièrement adapté à la situation où la livrée contient certains contenus dont les proportions ne doivent pas être déformées, tels que par exemple un logo.

Dans ce cas, le procédé P comporte, de préférence, une étape de calcul S6, mise en œuvre par un élément de calcul 7 (COMP4) du dispositif informatique 1, pour déterminer une ou plusieurs zones de la texture bidimensionnelle T dont les proportions doivent être conservées. On définit $\gamma_i$ un poids scalaire positif pour chaque sommet $x_i$ de $X = \{x_0, \ldots, x_{N-1}\}$ où $\gamma_i$ prend une valeur strictement positive lorsque sommet $x_i$ se trouve dans une zone de la texture bidimensionnelle T dont les proportions doivent être conservées, et $\gamma_i$ est fixé à zéro partout ailleurs.

Le but de ce terme de préservation de forme $E_i$ est de préserver une forme locale, c'est-à-dire de garantir que la métrique de distance soit préservée localement autour de certains points particuliers.

Pour ce faire, le terme de préservation de forme $E_i$ pénalise le changement de distance entre ces points et leurs points voisins.

Aussi, dans un mode de réalisation préféré, le terme de préservation de forme $E_i$ vérifie l'expression suivante :

$$E_i = \sum_{i=0}^{N-1} \gamma_i \sum_{k \in N(i)} \|A_i(x_k - x_i) - (\hat{x}_k - \hat{x}_i)\|^2$$

dans laquelle :

- les $\gamma_i$ sont des poids qui permettent de sélectionner la zone de la livrée pour laquelle les proportions (par exemple le logo d'une compagnie aérienne) doivent être préservées ; et

- les *N(i)* sont les sommets qui sont voisins de $x_i$.

Le terme de position $E_p$ et le terme de préservation de forme $E_i$ permettent de garantir que certains points particuliers de la représentation correspondent à certains points de l'objet fabriqué O2 et que la proportion de certains éléments choisis de la représentation (imprimée) soit préservée.

Par ailleurs, dans un mode de réalisation particulier, la fonction cible E comporte également au moins un terme dit d'alignement $E_a$ amenant le maillage texturé transformé M2 à s'adapter aux points tridimensionnels acquis sur l'objet fabriqué O2.

Dans un mode de réalisation préféré, le terme d'alignement $E_a$ vérifie l'expression suivante :

$$E_a = \sum_{i=0}^{N-1} \omega_i \left( n_{\rho(i)}\big(\hat{x}_i - y_{\rho(i)}\big) \right)^2$$

dans laquelle :

- les $w_i$ sont des poids qui peuvent être utilisés pour contrôler l'influence de différents points en fonction de la fiabilité de leur correspondance ;
- $\rho_i$ est l'indice du point correspondant sur le nuage de points, pour le point $x_i$. La correspondance est identifiée en recherchant le point le plus proche dans le nuage de points *Y*. Ce point le plus proche est noté $y_{\rho(i)}$ ; et
- $n_{\rho(i)}$ est la normale unitaire de la surface cible au point correspondant $y_{\rho(i)}$. Cette surface cible est calculée avec une régression locale des voisins de $y_{\rho(i)}$.

Le terme $(n_{\rho(i)}(\hat{x}_i - y_{\rho(i)}))^2$ mesure alors la distance au carré de $\hat{x}_i$ au plan tangent à $y_\rho(i)$.

En outre, dans un mode de réalisation particulier, la fonction cible E comporte également au moins un terme de lissage $E_s$.

Le but du terme de lissage $E_s$ est de forcer le champ de déformation à être suffisamment lisse pour éviter des formes déformées non naturelles. Par régularité, on entend que les transformations affines affectées à deux points $x_i$ proches l'un de l'autre auront des paramètres proches l'un de l'autre.

Pour ce faire, le terme de lissage $E_s$ pénalise la différence entre les transformations sur des points voisins *N(i)*.

Dans un mode de réalisation préféré, le terme de lissage $E_s$ vérifie l'expression suivante :

$$E_s = \sum_{i=0}^{N-1} \sum_{k \in N(i)} \left\| T_i - T_j \right\|_F^2$$

dans laquelle :

- $\|.\|_F$ est la norme de Frobenius ; et
- $T_i$ est la matrice 3x4 qui concatène $A_i$ et $t_i$.

Par ailleurs, dans un mode de réalisation particulier, la fonction cible E comporte également au moins un terme de rigidité $E_r$ amenant les transformations du jeu de transformations affines à s'approcher d'une transformation rigide.

Plus précisément, le but de ce terme de rigidité $E_r$ est ainsi d'imposer à chaque transformation affine d'être proche d'une transformation rigide (comprenant une rotation et une translation).

Dans un mode de réalisation préféré, le terme de rigidité $E_r$ vérifie l'expression suivante :

$$E_r = \sum_{i=0}^{N-1} Rot(A_i) + \sum_{i=0}^{N-1} (det(A_i) - 1)^2$$

Dans cette expression, $Rot(A_i)$ s'écrit comme suit :

$$Rot(A_i) = \big(a_{i,1}.a_{i,2}\big)^2 + \big(a_{i,1}.a_{i,3}\big)^2 + \big(a_{i,2}.a_{i,3}\big)^2 + \big(1 - a_{i,1}.a_{i,1}\big)^2 + \big(1 - a_{i,2}.a_{i,2}\big)^2$$
$$+ \big(1 - a_{i,3}.a_{i,3}\big)^2$$

De plus, $A_i = [a_{i,1} a_{i,2} a_{i,3}]$ avec $A_i^T . A_i \approx I_3$

Dans un mode de réalisation préféré, la fonction cible E utilisée à la sous-étape S2B vérifie l'expression suivante :

$$E = C_1.E_a + C_2.E_s + C_3.E_r + C_4.E_p + C_5.E_i$$

Dans cette expression, $C_1$, $C_2$, $C_3$, $C_4$ et $C_5$ sont des coefficients de pondération associés aux différents termes de la fonction cible E, qui de préférence vérifient les expressions précédentes.

Ces coefficients de pondération permettent de régler l'importance donnée à chaque terme. De préférence, le terme de position $E_p$ et le terme de préservation de forme $E_i$ sont privilégiés.

Par ailleurs, dans un mode de réalisation préféré, à la sous-étape S2D, l'élément de calcul 4D met en œuvre les opérations successives suivantes :

- il calcule un gradient de la fonction cible E par rapport au jeu de transformations affines $\Xi = ((A_0, t_0), ... , (A_{N-1}, t_{N-1}))$ ;
- il détermine une direction d'ajustement sur la base de ce gradient, c'est-à-dire la direction dans laquelle il convient d'ajuster les paramètres $(A_i, t_i)$ du jeu de transformations affines pour réduire la valeur de la fonction cible E ; et
- il détermine un nouveau jeu de transformations affines le long de cette direction d'ajustement, par exemple en ajoutant une valeur prédéterminée (ou pas) à tous les paramètres $(A_i, t_i)$ du jeu de transformations affines.

Dans un mode de réalisation particulier, à la sous-étape S2D, l'élément de calcul 4D utilise un solveur spécialisé de moindres carrés non linéaires (en anglais « NLLS » pour « Non Linear Least Squares »), tel qu'un solveur de type Gauss-Newton ou de type Levenberg-Marquardt. Comme la fonction cible E présente une forme de somme de carrés, le problème de convergence et d'optimisation peut être résolu de manière avantageuse à l'aide d'un tel solveur pour atteindre un taux de convergence super-linéaire.

Par ailleurs, le dispositif informatique 1 peut également comporter, comme représenté sur la figure 2 :

- au moins une mémoire 8 (MEM pour « Memory » en anglais) susceptible de stocker des données qui sont utilisées pour les traitements de données et calculs mis en œuvre par les éléments de calcul du dispositif informatique 1, telles que par exemple le jeu de transformations initial ; et
- une interface homme/machine 9 (HMI pour « Human-Machine Interface » en anglais) permettant à un opérateur de fournir des données au dispositif informatique 1, telles que par exemple la valeur seuil V2 pour la fonction cible E.

De plus, l'unité de réception 2 et l'unité de transmission 3 peuvent faire partie d'un système de communication 10 usuel permettant au dispositif informatique 1 de communiquer avec des dispositifs externes audit dispositif informatique 1, par une liaison filaire ou non filaire.

Les différents éléments de calcul et/ou unités de calcul du dispositif informatique 1 peuvent correspondre à tout type de processeur apte à mettre en œuvre les traitements et calculs correspondants. Ils peuvent être regroupés dans une seule unité de calcul.

Par conséquent, dans le cadre de la présente invention, on prévoit deux maillages de type similaire (avec le même nombre de sommets et de polygones), le premier maillage correspondant à la tessellation de l'objet tel que conçu et le second maillage étant créé comme une copie du premier maillage, qui est conçue pour s'adapter à l'objet fabriqué (défini par le nuage de points acquis).

Le procédé P met donc en œuvre (au moyen du dispositif informatique 1) une transformation non rigide qui aligne le maillage texturé initial sur les points tridimensionnels du nuage de points acquis sur l'objet fabriqué, à l'aide d'un modèle de déformation (ou jeu de transformations) qui modélise la déformation de l'objet fabriqué par rapport à l'objet conçu. Cela entraîne un léger déplacement des sommets du maillage créé (le maillage texturé transformé) sans changer la structure globale du maillage (même nombre de sommets et de polygones, régularité des polygones, ...). Ainsi, contrairement à une déformation rigide où l'ensemble du maillage subit une même transformation pour s'aligner sur le nuage de points, dans la présente transformation non rigide, différentes parties du maillage peuvent subir différentes déformations pour tenir compte d'un comportement non rigide, comme dans le cas d'un avion qui peut subir une déformation globale non homogène induite par la gravité et/ou une variation du dimensionnement due aux tolérances de fabrication.

Le procédé P et le dispositif informatique 1, tels que décrits ci-dessus, présentent ainsi de nombreux avantages. En particulier, ils permettent :

- de déterminer de façon relativement simple (sans filtrage complexe) le maillage texturé transformé qui, de plus, est particulièrement bien adapté à une simulation de l'impression ;
- d'aider à obtenir une bonne fidélité de la livrée telle qu'imprimée sur l'objet fabriqué par rapport à la livrée telle que conçue sur l'objet conçu, notamment lorsque la géométrie de l'objet fabriqué ne correspond pas parfaitement à l'objet conçu avec des erreurs significativement plus grandes que la précision d'impression requise ;

- de garantir que certains sommets correspondent précisément à certains points de de l'objet fabriqué ; et
- de garantir que les proportions (géométriques) de certains éléments de la texture soient conservées.

## Revendications

1. Procédé pour déterminer un maillage texturé dit transformé (M2) d'un objet fabriqué (O2) tridimensionnel à partir d'un maillage texturé dit initial (M1) d'un objet conçu (O1) tridimensionnel, le maillage texturé transformé (M2) étant destiné à l'impression d'une texture bidimensionnelle (T) sur l'objet fabriqué (O2), l'objet fabriqué (O2) correspondant à l'objet conçu (O1), ledit procédé (P) étant mis en œuvre par un dispositif informatique (1) et comprenant au moins les étapes suivantes :

   - une étape de réception (S1) pour recevoir un maillage représentant l'objet conçu (O1) tridimensionnel et une texture bidimensionnelle (T) associée, qui forment ledit maillage texturé initial (M1) comprenant des sommets, ainsi que des points tridimensionnels (Pm) d'un nuage de points (NP) acquis sur l'objet fabriqué (O2) ; et
   - une étape de détermination (S2) pour déterminer le maillage texturé transformé (M2), en prenant en compte au moins certains desdits sommets et au moins certains desdits points tridimensionnels (Pm),

   **caractérisé en ce que** l'étape de détermination (S2) met en œuvre un traitement itératif pour déterminer un jeu de transformations affines à paramètres individualisés permettant de minimiser la valeur d'une fonction cible, en tenant compte dudit maillage texturé initial (M1) et desdits points tridimensionnels (Pm) pris en compte du nuage de points (NP), la fonction cible comprenant au moins un terme favorisant une propriété spécifique concernant le jeu de transformations affines, le jeu de transformations affines ainsi déterminé étant appliqué aux sommets pris en compte du maillage texturé initial (M1) de manière à obtenir ledit maillage texturé transformé (M2).

2. Procédé selon la revendication 1,
   **caractérisé en ce que** l'étape de détermination (S2) comporte au moins la suite (SE) de sous-étapes successives suivantes, ladite suite (SE) étant mise en œuvre de façon itérative :

   - une première sous-étape (S2A) pour appliquer un jeu de transformations affines aux sommets pris en compte du maillage texturé initial (M1) de manière à obtenir des sommets d'un maillage texturé dit calculé, ledit jeu de transformations affines correspondant lors de la première itération à un jeu de transformations affines prédéterminé et lors de chacune des itérations suivantes à un jeu de transformations affines déterminé à l'itération précédente ;
   - une deuxième sous-étape (S2B) pour calculer la valeur de la fonction cible à partir des sommets pris en compte du maillage texturé initial (M1), des points tridimensionnels (Pm) pris en compte du nuage de points (NP) et des sommets du maillage texturé calculé ;
   - une troisième sous-étape (S2C) pour comparer ladite valeur calculée de la fonction cible à une valeur seuil prédéterminée et pour :

     • si ladite valeur calculée est inférieure à la valeur seuil, arrêter l'étape de détermination (S2) et considérer que le maillage texturé transformé (M2) correspond au maillage texturé calculé à la première sous-étape (S2A) de l'itération courante ; et
     • si ladite valeur calculée est supérieure ou égale à la valeur seuil, poursuivre l'étape de détermination (S2) en mettant en œuvre la quatrième sous-étape (S2D) ; et

     - la quatrième sous-étape (S2D) pour déterminer un nouveau jeu de transformations affines en fonction de la fonction cible et du jeu de transformations affines, ce nouveau jeu de transformations affines étant utilisé à la première sous-étape (S2A) de l'itération suivante.

3. Procédé selon l'une des revendications 1 et 2,
   **caractérisé en ce que** ladite étape de détermination (S2) est arrêtée, le cas échéant, lorsqu'un nombre prédéterminé d'itérations est atteint, le maillage texturé transformé (M2) correspondant au dernier maillage texturé calculé.

4. Procédé selon l'une quelconque des revendications précédentes, **caractérisé en ce que** la fonction cible comprend au moins un terme amenant certains sommets du maillage texturé transformé (M2) à correspondre à des points dit cible de l'objet fabriqué (O2).

**5.** Procédé selon l'une quelconque des revendications précédentes, **caractérisé en ce que** la fonction cible comprend au moins un terme amenant certains sommets du maillage texturé transformé (M2) à conserver une distance prédéterminée entre eux.

**6.** Procédé selon l'une quelconque des revendications précédentes, **caractérisé en ce que** la fonction cible comprend au moins l'un des termes suivants :

- un terme amenant le maillage texturé transformé (M2) à s'adapter aux points tridimensionnels acquis sur l'objet fabriqué (O2) ;
- un terme amenant la transformation générée par le jeu de transformation affines à forcer une déformation lisse ;
- un terme amenant la transformation générée par le jeu de transformations affines à s'approcher d'une transformation rigide.

**7.** Procédé selon l'une des revendications 2 et 3,
**caractérisé en ce que** la quatrième sous-étape (S2D) comprend les opérations successives suivantes :

- calcul du gradient de la fonction cible par rapport au jeu de transformations affines ;
- détermination d'une direction d'ajustement sur la base de ce gradient ; et
- détermination d'un nouveau jeu de transformations affines le long de cette direction d'ajustement.

**8.** Procédé selon l'une quelconque des revendications 2, 3 et 7, **caractérisé en ce que** la quatrième sous-étape (S2D) utilise un solveur spécialisé de moindres carrés non linéaires.

**9.** Procédé selon l'une quelconque des revendications précédentes, **caractérisé en ce qu'**il comporte :

- une étape de calcul (S4) pour déterminer un jeu de transformations affines initial ; et/ou
- une étape de calcul (S5) pour déterminer des points cible de l'objet fabriqué (O2) ; et/ou
- une étape de calcul (S6) pour déterminer au moins une zone de la texture bidimensionnelle (T) dont les proportions doivent être préservées.

**10.** Dispositif informatique pour déterminer un maillage texturé dit transformé (M2) d'un objet fabriqué (O2) tridimensionnel à partir d'un maillage texturé dit initial (M1) d'un objet conçu (O1) tridimensionnel, le maillage texturé transformé (M2) étant destiné à l'impression d'une texture bidimensionnelle (T) sur l'objet fabriqué (O2), l'objet fabriqué (O2) correspondant à l'objet conçu (O1), ledit dispositif informatique (1) comprenant au moins :

- une unité de réception (2) configurée pour recevoir un maillage représentant l'objet conçu (O1) tridimensionnel et une texture bidimensionnelle (T) associée, qui forment ledit maillage texturé initial (M1) comprenant des sommets, ainsi que des points tridimensionnels (Pm) d'un nuage de points (NP) acquis sur l'objet fabriqué (O2) ; et
- une unité de calcul (4) configurée pour déterminer le maillage texturé transformé (M2), en prenant en compte au moins certains desdits sommets et au moins certains desdits points tridimensionnels (Pm),

**caractérisé en ce que** l'unité de calcul (4) comporte des éléments de calcul (4A, 4B, 4C, 4D) configurés pour mettre en œuvre un traitement itératif afin de déterminer un jeu de transformations affines à paramètres individualisés permettant de minimiser la valeur d'une fonction cible, en tenant compte dudit maillage texturé initial (M1) et desdits points tridimensionnels (Pm) pris en compte du nuage de points (NP), la fonction cible comprenant au moins un terme favorisant une propriété spécifique concernant le jeu de transformations affines, le jeu de transformations affines ainsi déterminé étant appliqué aux sommets pris en compte du maillage texturé initial (M1) de manière à obtenir ledit maillage texturé transformé (M2)..

Fig. 1

Fig. 2

Fig. 3

**RAPPORT DE RECHERCHE EUROPEENNE**

Europäisches Patentamt
European Patent Office
Office européen des brevets

Numéro de la demande

EP 26 15 1270

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2023/051312 A1 (CATANA SALAZAR JUAN CARLOS [US] ET AL) 16 février 2023 (2023-02-16) * alinéa [0018] - alinéa [0036]; figures 5A, 5B * ----- | 1-10 | INV. G06T19/20 |
| A,D | US 10 198 860 B1 (SMITH ZACHARY R [US] ET AL) 5 février 2019 (2019-02-05) * colonne 10, ligne 3 - colonne 13, ligne 35; figures 3-7 * ----- | 1-10 | |

DOMAINES TECHNIQUES RECHERCHES (IPC)

G06T

Le présent rapport a été établi pour toutes les revendications

| Lieu de la recherche | Date d'achèvement de la recherche | Examinateur |
|---|---|---|
| La Haye | 17 avril 2026 | Martos Riaño, Demian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 26 15 1270

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-04-2026

| Document brevet cité au rapport de recherche | Date de publication | Membre(s) de la famille de brevet(s) | | Date de publication |
|---|---|---|---|---|
| US 2023051312 A1 | 16-02-2023 | CN | 114930405 A | 19-08-2022 |
| | | EP | 4091143 A1 | 23-11-2022 |
| | | TW | 202129600 A | 01-08-2021 |
| | | US | 2023051312 A1 | 16-02-2023 |
| | | WO | 2021145892 A1 | 22-07-2021 |
| US 10198860 B1 | 05-02-2019 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10198860 B1